# EUROPEAN PATENT SPECIFICATION

(11) **EP 2 504 613 B1**
(45) Date of publication and mention of the grant of the patent: **05.03.2014**
(21) Application number: 10787942.1
(22) Date of filing: 19.11.2010
(51) Int. Cl.: F16L 37/098, F16L 55/11

(54) **VERIFICATION PIN**
VERIFIZIERUNGS-PIN
TIGE DE VÉRIFICATION

(30) Priority: 23.11.2009 US 263691 P
(43) Date of publication of application: 03.10.2012
(73) Proprietor: TI Group Automotive Systems, L.L.C., Auburn Hills, MI 48326 (US)
(72) Inventor: GUNDERSON, Stephen, Marine City, MI 48039 (US)
(74) Representative: Rohmann, Michael
(86) International application number: PCT/US2010/057390
(87) International publication number: WO 2011/063211

(56) References cited:
- EP-A2- 1 026 435
- US-A- 5 472 016
- US-A1- 2004 093 708
- US-A1- 2007 052 232
- US-A1- 2008 231 044
- US-B1- 6 517 115

## Description

### BACKGROUND OF THE INVENTION

This disclosure relates to quick connector coupling fittings for fluid line systems. More particularly, it relates to an accessory to verify the integrity of the fitting elements prior to installation on a system component.

Quick connector couplings in the form of a fitting are commonly used to provide a fluid connection between a fluid conduit and a component of a fluid system. Such fittings are often employed in brake systems, power steering systems or refrigeration systems of automotive vehicles.

Typically the fitting includes a connector body that is secured by threads to a system component. The body defines a fluid passage and tube receiving bore to releasably receive a rigid tube to be connected to the system component. A retainer, carried by the connector body, releasably secures the tube to the body. A sealing element within the tube receiving bore provides a fluid tight seal between the connector body and the tube.

Quick connector coupling fittings are often manufactured by a manufacturer that supplies the fitting to another manufacturer that supplies the system components. The system components, with fittings attached, may then be supplied to an assembler of the system, for example, an automotive manufacturer for completion of a fluid system on a vehicle.

EP 1 026 435 A2 discloses a latch collet pin for the assembly of a collet and seal of a tube coupling in a tube coupling body. The collet and the seal are pre-assembled on the pin having a bore open to the seal from outside the coupling body.

US 5,472,016 relates to a stuffer pin for mounting seals and a retainer element in a quick connector used with fluid conduits wherein the stuffer pin includes an integral shaft, an enlarged stop and a handle. Annular seal mounting portions are formed on the shaft for releasibly supporting the seal elements. A ridge is formed on the shaft for releasibly engaging and mounting a retainer on the shaft. Resilient arms extend axially from an end of the shaft and have a larger nominal outer diameter than the diameter of the shaft to retain the seal elements on the shaft prior to insertion into a bore in a fluid carrying member.

In US 2004/093708 A1 there is discribed a stuffer pin for a rotatable, two part fluid quick connector. The pin carries seal elements and a retainer housing is carrying a retainer for mounting the seal elements in the bore of a first component of the fluid quick connector. The retainer housing is positioned for locking and rotatable engagement with the first component. A flange on the stuffer pin prevents premature movement of the retainer in the retainer housing to the fully latched position until the stuffer pin is removed from the assembled two part fluid quick connector.

Furthermore, US 6,517,115 B1 discloses a device with a tubular insert possessing external means for fixing it in a bore of a rigid element. The device comprises an internal means for axially locking the tube inside the insert. The axial locking means comprise a sleeve disposed inside the tubular insert possessing a broad end arranged to bear against an internal abutment member of the tubular insert. Additionally, the sleeve posesses a narrow end that is elastically deformable in a radial direction between a small rest configuration where it forms an abutment for a shoulder of the tube and an enlarged elastically deformed configuration allowing the shoulder of the tube to pass through while it is being inserted.

The final assembly process entails insertion of the end form of a rigid tube into the tube receiving bore and releasable connection of the tube to the connector body in fluid tight relation. Prior to such installation, at one or more stages of production, it is desirable to confirm the integrity of the connector coupling fitting assembly to ensure completion of a secured fluid tight connection with the tube at final assembly. The verification pin of the present disclosure provides the mechanism to verify this integrity without the need to assemble a tube end form into the connector tube receiving passage.

### SUMMARY OF THE DISCLOSURE

The verification pin of the present disclosure comprises an elongate cylindrical pin releasably secured in the tube receiving bore of the connector body. It includes a sealing surface for fluid tight sealing relation to the sealing elements of the fitting. The pin is releasably secured to the retainer of the fitting assembly to withstand pressurization of the fluid passage and to confirm the integrity of the assembled fitting elements, namely the body, retainer and sealing elements.

The verification pin also acts as a barrier to entry of foreign matter into the tube receiving bore prior to completion of the coupling configuration. The pin includes deformable arms to disengage the verification pin from the fitting assembly to permit its removal at final assembly of the fluid coupling.

### BRIEF DESCRIPTION OF THE SEVERAL VIEWS OF THE DRAWINGS

Fig. 1 is a perspective view of a quick connector coupling fitting with a verification pin in place.
Fig. 2 is a sectional side view of a completed quick connector coupling employing the fitting of Fig. 1.
Fig. 3 is a-side view of the retainer of the quick connector coupling of Fig. 2.
Fig. 4 is a further side view of the retainer of Fig. 3, rotated ninety degrees (90°) about its longitudinal axis relative to the view in Fig. 3.
Fig. 5 is a side sectional view of the retainer of Fig. 3.
Fig. 6 is a perspective view of the verification pin of the present disclosure.
Fig. 7 is a top view of the verification pin of the present disclosure.
Fig. 8 is a side view of the verification pin of the present disclosure.
Fig. 9 is a front view of the verification pin of the present disclosure.
Fig. 10 is a sectional side view of a quick connector coupling fitting with a verification pin of the present disclosure partially inserted into the tube receiving bore.
Fig. 11 is a sectional side view of a quick connector coupling fitting with a verification pin of the present disclosure installed and releasably secured to the retainer.
Figure 12 is a fragmentary view, on an enlarged scale, of the quick connector coupling fitting and verification pin of Fig. 11.

### DETAILED DESCRIPTION OF THE ILLUSTRATED EMBODIMENT

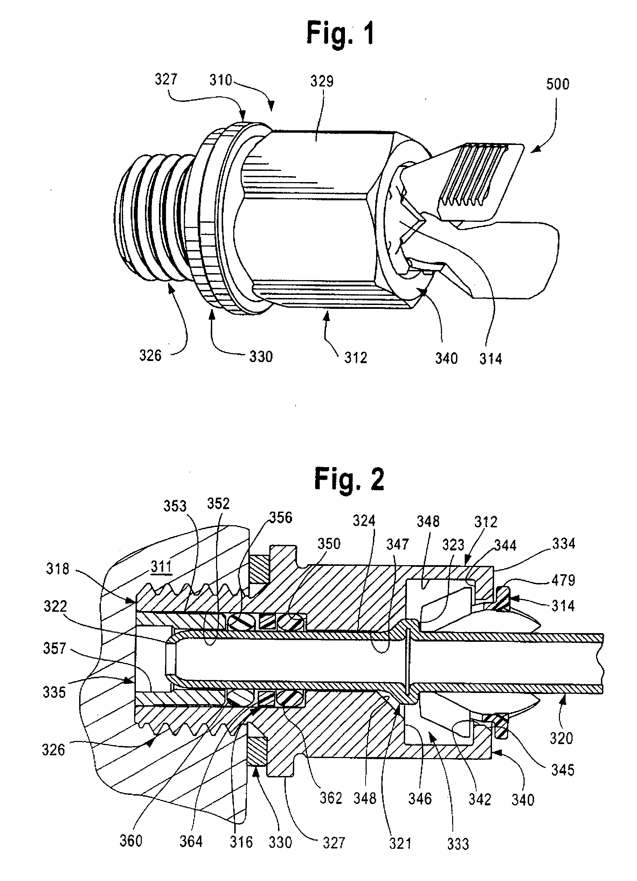

Figure 2 illustrates a quick connector fluid coupling 310 having a fitting or connector body 312, a tube retainer 314, a seal pack 316, an outer spacer 318, and a rigid tube 320. The tube 320 defines a male member having a radially directed upset 321 spaced from the free end 322 of the tube 320. The upset includes a rearward radial annular abutment surface 323. The male member includes an outer cylindrical sealing surface 324 between upset 321 and free end 322.

The fitting or body 312 includes a threaded end 326 connected to the System component 311 of a fluid system. The fitting or connector body 312 includes a radial flange 327 and a series of flats 329 to receive a wrench for tightening the fitting into a receptacle on the component complementary to the threaded end 326. (See also Fig. 1) A sealing washer 330 is interposed between the component 311 and the flange 327 of the fitting or connector body 312.

Connector body 312 defines a through bore 333 extending axially forward from an entrance opening at planar wall surface 334 to an exit opening 335 at threaded end 326. The bore 333 defines a retainer receiving portion axially forward of the entrance opening, a tube receiving portion axially forward of the retainer receiving portion, and a sealing Chamber portion axially forward of the tube receiving portion that extends to exit opening 335. The bore 333 provides fluid communication to the fluid component 311 at exit opening 335.

In describing the quick connector coupling, the term longitudinal means axially along the longitudinal centerline of the fitting 312 and tube 320. The term axially forward, means a direction toward the threaded end 326. Axially rearward means in a direction toward the entrance opening from threaded end 326. The terms inward or inwardly means radially toward the longitudinal centerline of the fitting 312 and tube 320 and outward or outwardly means radially away from the longitudinal centerline.

The entrance opening at planar surface 334 is defined by an annular flange or rim 340 with a cylindrical surface 342 and a radially annular abutment or locking surface 344 forward of planar wall 334. Chamfer 345 connects cylindrical surface 342 with planar wall surface 334.

The retainer receiving portion further includes cylindrical wall 348 of a diameter sufficient to house operative elements of the retainer 314, The retainer receiving portion includes a forward annular wall 346 spaced axially forward of radial annular abutment surface 344. Throughbore 333 includes cylindrical surface 347 having a diameter slightly larger than outer cylindrical sealing surface 324 of tube 320 that defines the tube receiving portion forward of forward annular wall 346. The chamfer 348 connects forward annular wall 346 and cylindrical surface 347. The cylindrical surface 347 surrounds the tube outer cylindrical sealing surface 324 and pilots or supports the tube 320 within the throughbore 333 of connector body 312.

Sealing chamber extends between a forwardmost radial annular wall 350 and exit opening 335. It includes a cylindrical sealing surface 352 of a diameter larger than the diameter of cylindrical surface 347 of the tube receiving portion. It is sized to contain seal pack 316 in surrounding relation to the outer cylindrical sealing surface 324 of tube 320.

Outer spacer 318 is an annular sleeve having an outer cylindrical engagement surface 353 secured by interference or press fit within cylindrical sealing surface 352. It includes a rearward facing radial annular seal retention surface 356 spaced from forwardmost radial annular wall 350. Outer spacer includes an internal bore defined by surface 357 having a diameter slightly larger than outer cylindrical sealing surface 324 of tube 320. It defines a passage in fluid communication with the free end 322 of tube 320. It provides fluid communication to the component 311 associated with the quick connector coupling 310 at exit opening 335.

Seal pack 316 is disposed between the forwardmost radial annular wall 350 and rearward facing radial annular seal retention surface 356 of outer spacer 318. It includes a pair of resilient polymeric O-rings 360 and 362 and an annular seal spacer 364. The spacer 364 separates the resilient O-rings 360 and 362. The resilient O-rings 360 and 362 are sized to be deformed into fluid tight sealing contact with outer cylindrical sealing surface 324 of tube 320 and cylindrical sealing surface 352 of seal Chamber portion.

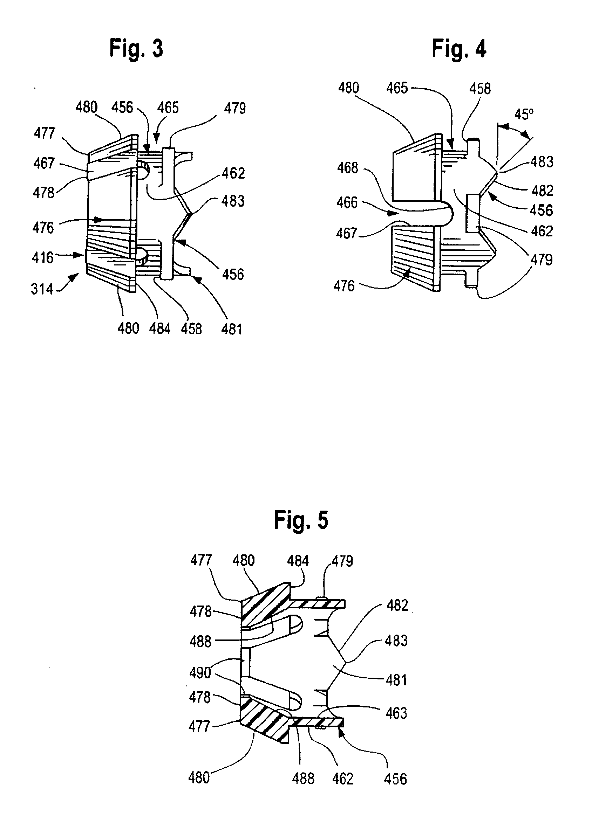

The tube retainer 314, best seen in Figs. 3 to 5, is disclosed in U.S. Patent Application Publication No. 2008/0231044 of application No. 12/048,947, filed March 14, 2008. Retainer 314 is an annular member. It includes a cylindrical ring 456 having an outer cylindrical surface 462 and an inner cylindrical surface 463.

The diameter of outer cylindrical surface 462 is somewhat smaller than the diameter of cylindrical surface 342 of rim 340 such that the ring 456 of retainer 314 is loosely piloted therein. The diameter of inner cylindrical surface 463 of ring 456 is larger than the diameter of upset 321 of tube 320 to permit passage of the tube 320 and upset 321 through the ring 456 during insertion of tube 320 into body 312.

The retainer 314 also includes four axially extending duck bills or locking arms 476 with slots 466 between them. The slots 466 are defined by axially extending side faces 467 that terminate at curved end surfaces 468, best seen in Figure 4.

The locking arms 476 of retainer 314 have forward arcuate, generally radial abutment surfaces 478 that abut the tube upset 321 and rearward arcuate abutment surfaces 484 that abut radial annular abutment or locking surface 344 of rim 340 when the retainer 314 is installed into the connector body 312.

The locking arms 476 define top ramped surface 480, interior ramped surface 488 and cylindrical bottom surface 490. The locking arms are angled to diverge rearwardly toward rear abutment surfaces 484. On insertion of the male member or tube 320 into the entrance opening at planar face 334, the upset 321 contacts the interior ramped surfaces 488 and deflects the locking arms 476 radially outward to permit passage of the upset 321 forward beyond the front abutment surfaces 478. When the tube is fully inserted, the upset 321 resides forward of the locking arms 478 and the arms return to their normal position with cylindrical bottom surfaces 490 overlying the outer cylindrical sealing surface 324 of tube 320 rearward of the upset 321. The forward abutment surfaces 478 abut the radial annular abutment surface 323 of upset 321. Forward axial movement of tube 320 is limited by contact of upset 321 with chamfer 348 of bore 333.

The rearward end of ring 456 is provided with four radial protrusions 479 defining forward faces 458. These surfaces define a Channel 465 with the rear abutment surfaces 484. The axial forward movement of retainer 314 is limited by the forward faces 458. Channel 465 is sized to receive the rim 340 of the connector body 312. The cylindrical surface 342 of the connector body 312 overlies the outer cylindrical surface 462.

Intermediate each Protrusion 479 is a rearwardly directed guide element 481 defined by two angled guide surfaces 482 formed at an angle of forty-five degrees (45°) to a plane perpendicular to the longitudinal axis of the retainer 314. The surfaces are thus ninety degrees (90°) to each other and meet at a central apex 483. The guide surfaces 482 are chamfered to diverge in the forward direction.

When the retainer 314 is assembled to the connector body 312, the rim 340 resides radially outward of cylindrical surface 462 of ring 456. The rear abutment surfaces 484 of locking arms 476 abut the radial annular abutment surface 344 of rim 340. This relationship delivers the axial load of tube 320 to the radial annular abutment surface 344 of the connector body 312 from upset 321 through locking arms 476.

As seen in Fig. 1, quick connector coupling fittings 310 are preassembled to include the connector body 312, tube retainer 314, seal pack 316 and outer spacer 318. These sub-assemblies are protected by a verification pin 500. In this form, they are delivered to a supplier of system components such as the component 311 of Figure 2. In turn, the fittings 310 are installed into a system component 311 which is then delivered to an assembler, such as an automotive manufacturer, for ultimate installation into a fluid line system on a vehicle. This latter step includes insertion of the tube 320 into the coupling body 312 to complete the fluid tight coupling. At this juncture, the verification pin 500 is removed and discarded prior to insertion of the tube 320 to complete the fluid coupling.

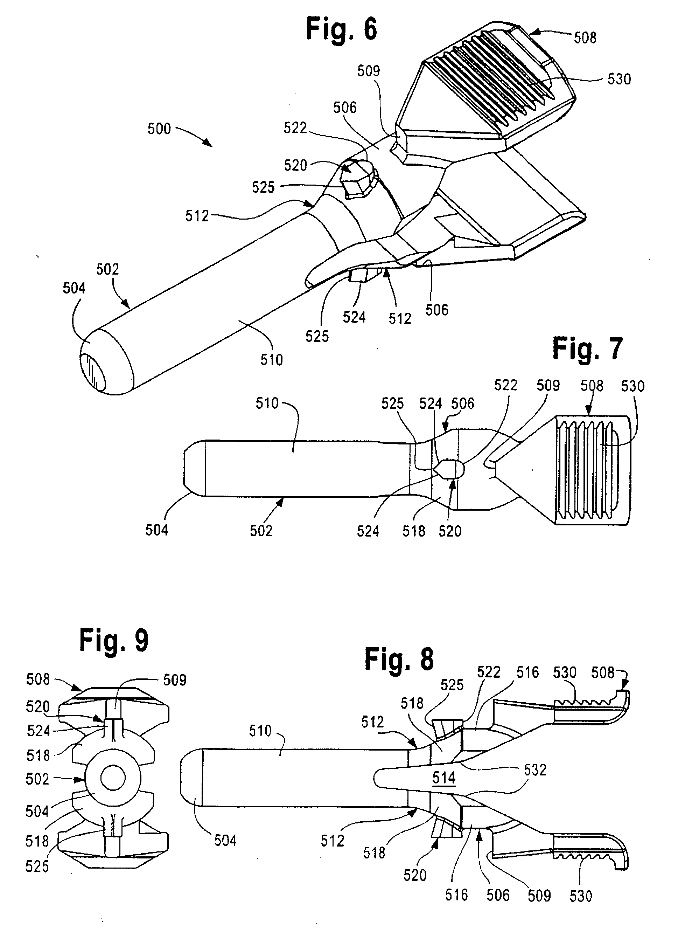

At one or more stages of the process, it is desirable to test the integrity of the fitting 310 to ensure that it includes all components and will perform its function of fluid tight releasable retention of the tube 314. It is also important to protect the tube receiving bore 333 from debris or other detrimental ingress prior to completion of the coupling connection. The verification pin 500 of the present disclosure provides these capabilities. It is illustrated in Figures 6 to 12. Verification pin 500 is employed in the sequence of manufacture, testing and installation of quick connector coupling fittings such as fitting 310 of Figure 1. Installed into bore 333 after assembly of the fitting 310, the verification pin 500 permits pressure testing (leak testing) of fittings 310 prior to assembly of the fitting onto a system component 311. It also prevents ingress of debris or other foreign matter prior to installation of tube 320.

Verification pin 500 is a unitary structure made of polymeric material such as polypthalamide (PPA). It includes a longitudinally elongate barrel portion 502 having a solid rounded free end 504 which aids in its insertion into the bore 333 of body 312. A latching portion is defined by a pair of latching body portions 506. These latching bodies 506 releasably secure the pin 500 to the fitting 310. Actuation finger portions 508 provide mechanism for releasing the latching body portions 506 for removal of the pin 500 from fitting 312.

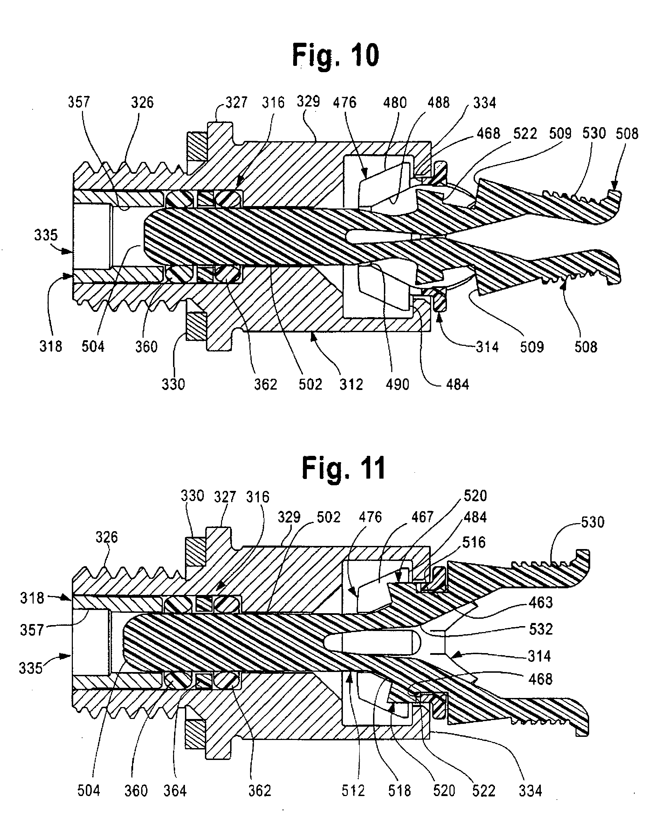

Barrel portion 502 includes an outer cylindrical sealing surface 510 that is sized to about the same diameter as the outer cylindrical sealing surface 324 of rigid tube 320. With verification pin 500 inserted into throughbore 333 through entrance opening at planar wall surface 334, as illustrated in Fig 10, the barrel portion 502 has an axial length to extend into outer spacer 318. Barrel portion 502 is piloted in cylindrical surface 347 of tube receiving portion of connector body 312. The barrel portion 502 extends through the seal Chamber portion through the elements of seal pack 316. The O-ring seals 360 and 362 are compressed between outer cylindrical sealing surface 510 of barrel portion 502 and cylindrical sealing surface 352 to provide a fluid tight seal. The rounded free end 504 of barrel portion 502 is piloted in the internal bore surface 357 of outer spacer 318.

Each latching body portion 506 is integrally connected to barrel portion 502 by an axial extending beam portion 512 extending from the barrel portion 502 at an end opposite the free end 504. The beam portions 512 define a generally "V" shaped Space 514 which, on application of radial inward force to actuation Anger portions 508 permit radial deflection of the latching body portions 506 toward each other.

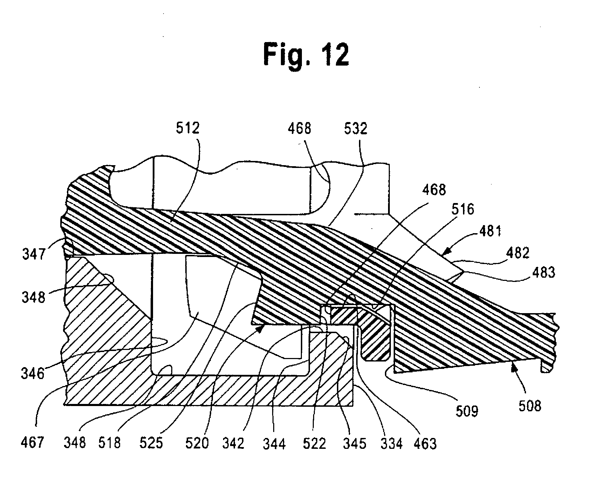

The latching body portions 506 each have an arcuate cylindrical surface 516 formed on a diameter slightly smaller man the diameter of inner cylindrical surface 463 of ring 456 of retainer 314. As best seen in Figures 11 and 12, the beam portions 512 and latching body portions 506 are configured such that, in the unstressed condition of beam portions 512, the arcuate cylindrical surfaces 516 are positioned to reside within inner cylindrical surface 463 of ring 456 of tube retainer 314.

The latching body portions 506 each include an arcuate conical surface 518 diverging from barrel portion 502 to arcuate cylindrical surface 516. The arcuate conical surfaces 518 normally reside within the interior ramped surfaces 488 defined by locking arms 476.

Each latching body portion 506 is provided with a radially outwardly directed pawl 520 integrally formed at the arcuate conical surfaces 518. The pawls 520 are disposed one hundred eighty degrees (180°) apart and are sized and positioned to fit between adjacent locking arms 476 within a slot 466.

Each pawl 520 includes a rearward radial abutment surface 522 that is curved to be complementary to the curved end surfaces 468 of slots 466 between adjacent locking arms 476 of tube retainer 314. At full insertion of the verification pin 500 into throughbore 333 of a sub-assembly of fitting body 312 and tube retainer 314 with beams 512 unstressed, the pawls 520 latch against axial rearward movement by abutment of radial abutment surfaces 522 against curved end surfaces 468 of slots 466 between adjacent locking arms 476. When so latched, the outer cylindrical sealing surface 510 of barrel portion 502 is disposed in fluid tight sealing relation with the O-ring seals 360 and 362.

Each of the pawls 520 includes forward guide surfaces 524 that forwardly converge to meet at an apex 525 and extend rearwardly from the apex 525 at an angle of forty five degrees (45°) to the longitudinal extent of pin 500, i.e. ninety degrees (90°) to each other. On axial insertion of the verification pin 500, contact of the guide surfaces 524 with angled surfaces 482 of guide elements 481 results in rotation of the verification pin 506 to position pawls 520 in alignment with two slots 466 and permit the pawls to pass into the two slots 466 between the side surfaces 467 of adjacent locking arms 476.

Release finger portions 508 extend from latching body portions 506. The forward end of each release finger 508 defines a stop surface 509 generally perpendicular to the longitudinal axis of the verification pin 500. It is spaced from rearward abutment surfaces 522 of pawls 520 a distance so as to reside rearward of a Protrusion 479 of tube retainer 314 when rearward abutment surfaces 522 are in abutting contact with curved end surfaces 468 of two slots 466. This relationship limits permissible forward insertion of verification pin 500 into throughbore 333. This contact determines the limit of forward movement of verification pin 500 relative to tube retainer 314.

Each release finger portion 508 includes a planar ribbed surface 530 for radial inward manual manipulation of the finger portions, and latching body portions 506 toward each other to reduce the size of Space 514. A stop surface 532 limits the permissible movement of the locking body portions 506 toward each other. When so compressed, as illustrated in Fig. 10, the pawls are spaced apart such that they are free to pass through the inner cylindrical surface 463 of cylindrical ring 456 of tube retainer 314. Verification pin 500 may be axially withdrawn from throughbore 333 of fitting 312.

The quick connector coupling sub-assembly including connector body or fitting 312, tube retainer 314, seal pack 316 and outer spacer 318 is manufactured and assembled for later attachment to a fluid component such as illustrated in Fig. 2, The verification pin 500 is axially releasably secured into throughbore 333 as shown in Figs. 11 and 12 to create the sub-assembly illustrated in Fig. 1. During insertion of verification pin 500 the beam portions 512 are depressed radially inward until the pawls 520 pass through inner cylindrical surface 463 of ring 456 of tube retainer 314. The forward guide surfaces 524 of the two pawls 520 contact angled surfaces 482 of two of the guide elements 481 to circumferentially align the pawls 520 with two of the slots 466 between locking arms 476. After the pawls 520 move sufficiently forward to pass beyond cylindrical ring 456, the pawls enter slots 466 between side faces 467 to place the rearward abutment surface 522 of each pawl 520 in abutting relation to a curved end surface 468 of a slot 466. On release, the beam portions 512 flex radially outward to an unstressed condition with the pawls 520 captured within two slots 466 disposed one hundred eighty degrees (180°) apart.

The arcuate cylindrical surface 516 of each latching body 506 lies within inner cylindrical surface 463 of ring 456 and arcuate conical surfaces 518 are surrounded by interior ramped surfaces 488 of locking arms 476. Stop surfaces 509 of actuation finger portions 508 abut protrusions 479. The outer cylindrical sealing surface 510 of barrel portion 502 of verification pin 500 is disposed in fluid tight relation to O-rings 360 and 362 of seal pack 316.

The quick connector coupling fitting 310 with verification pin 500 releasably attached may be installed onto a test fixture to test against leakage of the seal pack 316 within seal Chamber portion. The threaded end 326 is screwed into a test fixture and its connection sealed by sealing washer 330. On pressurization, fluid under pressure enters the passage defined by surface 357 on outer spacer 318 through exit opening 335. The O-ring seals 360 and 362 are compressed in fluid tight relation between cylindrical sealing surface 352 of seal Chamber portion of connector body 312 and outer cylindrical sealing surface 510 of barrel portion 502 of verification pin 500. Any leakage from fitting body 312 will indicate the absence of, or change to, to the components of seal pack 316.

Pressurization of passage 358 imparts axial forces to solid rounded free end 504 of verification pin 500 to urge it axially rearward out of the throughbore 333. The latching relation of the rearward abutment surfaces 522 of pawls 520 with curved end surfaces 468 of slots 466 prevents such movement and retains the verification pin 500 in position within connector body 312. Since the releasable latching connection of the verification pin 500 to the sub-assembly is with the tube retainer 314 rather than a surface on connector body 312, for example, radial annular abutment surface 344, successful pressure testing verifies the presence of the tube retainer 314 on the assemblage.

At the stage of assembly of a tube 320 into the connector body 312, the verification pin 500 is easily removed, and discarded. Actuation fingers 508 are manipulated toward each other until the pawls 520 can pass through inner cylindrical surface 463 of cylindrical ring 456 of retainer. The tube 320 is inserted into the throughbore 333 of connector body 312 to complete a fluid tight coupling 310.

Various features of the present invention have been described with reference to the illustrated embodiments. It should be understood that modifications may be made without departing from the scope of the present invention as recited by the following claims.

## Claims

1. A quick connector coupling fitting (310) comprising:
a connector body (312) having a through bore (333) extending axially forward from an entrance opening (334) at one end to an exit opening (335) at an opposite end, said through bore (333) defining a retainer receiving portion axially forward of said entrance opening, a tube receiving portion axially forward of said retainer receiving portion and a sealing chamber portion axially forward of said tube receiving portion,
a tube retainer (314) disposed in said retainer receiving portion releasably secured to said connector body (312);
a seal element (316) disposed in said seal chamber portion,
a verification pin (500) having a solid free end (504) disposed in said through bore (333), said pin (500) including an elongate barrel portion (502) in fluid tight sealing relation with said seal element (316) in said seal chamber portion; **characterised in that** said pin further includes
opposed latching body portions (506) each including an axial extending beam portion (512) extending from said elongate barrel portion (502) at an end opposite said solid free end (504), said latching body portions (506) releasably engaged with said retainer (314) to releasably secure said verification pin (500) within said throughbore (333).

2. A quick connector coupling fitting as claimed in claim 1 wherein said retainer (314) includes a plurality of axially extending locking arms (476) with slots (466) between them defined by axially extending side faces (467) that terminate in curved end surfaces (468) and wherein at least one of said latching body portions (506) includes a radially outwardly directed pawl (520) disposed within one of said slots (466), said at least one pawl (520) including a rearward radial abutment surface (522) in abutting relation to said curved end surface (468) of said slot (466).

3. A quick connector coupling fitting assembly as claimed in claim 2 wherein each said latching body portion (506) includes a radially outwardly directed pawl (520) disposed within one of said slots (466), said pawls (520) each including a curved rearward radial abutment surface (522) abutting one of said curved end surfaces (468) of one of said slots (466).

4. A quick connector coupling fitting as claimed in claim 3 wherein said retainer (314) includes a plurality of rearwardly directed guide elements (481) each defined by two angled guide surfaces (482) formed at an angle relative to a plane perpendicular to the longitudinal axis of said retainer, and wherein each said pawl (520) includes forward guide surfaces (524) that forwardly converge to an apex (525), said forward guide surfaces (524) extending rearwardly from said apex (525) at an angle to the longitudinal extent of said pin, said angled guide surfaces (482) of said rearwardly directed guide elements (481) of said retainer (314) and said forward guide surfaces (524) of said pawls (520) coacting to align said pawls (520) of said verification pin (500) with said slots (466) between said locking arms (476) of said retainer (314) on insertion of said pin (500) into said throughbore (333) of said connector body (312).

5. A quick connector coupling fitting as claimed in claim 4 wherein said angled guide surfaces (482) of each said rearwardly directed guide elements (481) of said retainer (314) are formed at an angle of ninety degrees (90°) to each other and forty-five degrees (45°) to the plane perpepdicular to the longitudinal axis of said retainer and said forward guide surfaces (524) of each said pawl (520) extend rearwardly from said apex (525) at an angle of forty-five degrees (45°) to the longitudinal extent of said pin and ninety degrees (90°) to each other.

6. A quick connector coupling fitting as claimed in claim 4 wherein a release finger (508) extends from each latching body portion (506) at an end opposite said axial extending beam portion (512), each said release finger (508) including a forward end defining a stop surface (509) generally perpendicular to the longitudinal axis of said verification pin spaced axially from said curved rearward radial abutment surface (522) of one of said pawls (520).

7. A quick connector coupling fitting assembly as claimed in claim 6 wherein said connector body (312) includes an annular rim (340) defining a radially annular locking surface (344) forward of said entrance opening (334), said retainer (314) includes a ring portion (456) disposed within said rim; said axially extending locking arms (476) each include a rearward abutment surface (484) abutting said radially annular locking surface (344) of said connector body, said rearwardly directed guide elements (481) extend rearwardly from said ring (456) and said ring (456) includes a plurality of radial protrusions (479) disposed between said guide elements (481) that define a channel (465) with said rearward abutment surfaces (484) of said locking arms, and wherein said stop surfaces (509) of said release fingers (508) are disposed rearwardly of said protrusions (479) when said rearward abutment surfaces (522) of said pawls (520) are in abutting relation to said curved end surfaces (468) of said slots (466).

8. A quick connector coupling fitting as claimed in claim 1 wherein said elongate barrel portion (502) includes an outer cylindrical surface (510) and said solid free end (504) is disposed in said sealing chamber portion of said through bore (333), and said seal element (316) includes at least one O-ring seal (360, 362) disposed in fluid tight relation between said cylindrical surface (510) and said seal chamber portion of said connector body (312).

9. A quick connector coupling fitting as claimed in claim 8 wherein an annular outer spacer (364) is disposed in said seal chamber defining portion of said through bore (333) forward of said seal element (316) and said solid free end (504) of said elongate cylindrical barrel portion (502) is disposed in said outer spacer (364).

10. A quick connector coupling fitting as claimed in claim 1 wherein said opposed axial extending beam portions (512) define a generally "V" shaped space between them which permits radial deflection of said latching body portions (506) toward each other on application of radial inward force.

11. A quick connector coupling fitting as claimed in claim 10 wherein a release finger (508) extends from each said latching body portion (506) at an end opposite said axial extending beam portion (512).

12. A verification pin (500) for a quick connector coupling fitting having a connector body defining a fluid passage and tube receiving bore to releasably receive a rigid tube, a retainer carried by the connector body to releasably secure the tube to the body, and sealing element within the tube receiving bore to provide a fluid tight seal between the bore in the body and the tube, said verification pin adapted to be releasably secured within the tube receiving bore of the connector body, said pin comprising:
a longitudinally elongate barrel portion (502) having a solid free end (504) and a cylindrical surface (510) sized for fluid tight sealing relation with the sealing element (316) of the fitting;
**characterised in that** said pin includes opposed latching body portions (506), each said latching body portion (506) including an axial extending beam portion (512) extending from said elongate barrel portion (502) at said end opposite said solid free end (504), said latching body portions (506) defining a generally "V" shaped space between them to permit radial deflection of said latching body portion (506) toward the other; said latching body portions adapted to releasably secure said verification pin (500) to the quick connector coupling fitting;
wherein each said latching body portion (506) includes a radially directed pawl (520), each said pawl (520) including a curved rearward radial abutment surface (522);
wherein each said pawl (520) includes forward guide surfaces (524) that forwardly converge to meet at an apex (525).

13. A verification pin as claimed in claim 12 wherein a release finger (508) extends from each said latching body portion (506) at an end opposite said axial extending beam portion (512).

14. A verification pin as claimed in claim 13 wherein said release fingers (508) include a forward end defining a stop surface (509) generally perpendicular to the longitudinal axis of said verification pin spaced axially from said curved rearward radial abutment surface (522) of said pawl (520).

15. A verification pin as claimed in claim 12 where said forward guide surface (524) of each said pawl (520) extend rearwardly from said apex (525) at an angle of forty-five degrees (45°) to the longitudinal extent of said pin and ninety degrees (90°) to each other.

## Patentansprüche

1. Schnellverbindungskupplung (310), aufweisend:
ein Verbindungsgehäuse (312), aufweisend eine Durchgangsbohrung (333), die sich von einer Eingangsöffnung (334) am einen Ende axial nach vorn erstreckt bis zu einer Ausgangsöffnung (335) an einem gegenüber liegenden Ende, wobei die Durchgangsbohrung (333) einen Halterungsaufnahmeteil axial vor der Eingangsöffnung, einen Rohraufnahmeteil axial vor dem Halterungsaufnahmeteil und einen Dichtungskammerteil axial vor dem Rohraufnahmeteil definiert,
eine Rohrhalterung (314), die im Halterungsaufnahmeteil lösbar verbunden mit dem Verbindungsgehäuse (312) angeordnet ist,
ein Dichtungselement (316), angeordnet im Dichtungskammerteil,
einen Verifizierungs-Pin (500), aufweisend ein massives, in der Durchgangsbohrung (333) angeordnetes freies Ende (504), wobei der Pin (500) einen länglichen zylindrischen Teil (502) in fluiddichtem Abdichtverhältnis zum Dichtungselement (316) im Dichtungskammerteil aufweist; **dadurch gekennzeichnet, dass** der Pin ferner Folgendes aufweist:
einander gegenüber liegende Verriegelungsgehäuseteile (506), jeweils aufweisend einen sich axial erstreckenden Trägerteil (512), der sich vom länglichen zylindrischen Teil (502) an einem dem gegenüber liegenden massiven freien Ende (504) aus erstreckt, wobei dir Verriegelungsgehäuseteile (506) lösbar mit der Halterung (314) im Eingriff sind, um den Verifizierungs-Pin lösbar innerhalb der Durchgangsbohrung (333) zu sichern.

2. Schnellverbindungskupplung nach Anspruch 1, wobei die Halterung (314) mehrere sich axial erstreckende Verriegelungsarme (476) mit zwischen diesen durch sich axial erstreckende, in gekrümmten Endfläche (468) endenden Seitenflächen (467) definierten Schlitzen (466) aufweist, wobei wenigstens einer der Verriegelungsgehäuseteile (506) einen radial nach außen gerichteten, innerhalb einem der Schlitze angeordneten Stift (520) aufweist, wobei wenigstens ein Stift (520) eine rückwärts gerichtete radiale Neigungsfläche (522) in einem Neigungsverhältnis zur gekrümmten Endfläche (568) des Schlitzes (466) aufweist.

3. Schnellverbindungskupplungs-Baugruppe nach Anspruch 2, wobei jeder Verriegelungsgehäuseteil (506) einen radial nach außen gerichteten, innerhalb eines der Schlitze (466) angeordneten Stift (520) aufweist, wobei die Stifte (520) jeweils eine gekrümmte, rückwärtige radiale Neigungsfläche (522) aufweisen, die zu einer der gekrümmten Endflächen (468) von einem der Schlitze (466) hin geneigt ist.

4. Schnellverbindungskupplung nach Anspruch 3, wobei die Halterung (314) mehrere rückwärts gerichtete Führungselemente (481) aufweist, die durch zwei gewinkelte Führungsflächen (482), jede in einem Winkel relativ zu einer rechtwinkligen Längsachse der Halterung definiert sind, und wobei jeder Stift (520) vordere Führungsflächen (524) aufweist, die vorwärts gerichtet zu einer Öffnung (525) zusammenlaufen, wobei sich die vorderen Führungsflächen (524) von der Öffnung (525) aus rückwärts in einem Winkel zur Längsverlängerung des Pins erstrecken, wobei die gewinkelten Führungsflächen (482) der rückwärts gerichteten Führungselemente (481) der Halterung (314) und die vorderen Führungsflächen (524) der Stifte (520) zusammenwirken, um die Stifte (520) des Verifizierungs-Pins (500) mit den Schlitzen zwischen Verriegelungsarmen (476) der Halterung (314) bei Einführen des Pins (500) in die Durchgangsbohrung (333) des Verbindungsgehäuses (312) auszurichten.

5. Schnellverbindungskupplung nach Anspruch 4, wobei die gewinkelten Führungsflächen (482) jedes rückwärts gerichteten Führungselements (481) der Halterung (314) jeweils in einem Winkel von neunzig Grad (90°) zueinander und von fünfundvierzig Grad (45°) zu der rechtwinklig zur Längsachse der Halterung verlaufenden Ebene geformt sind, und wobei sich die vorderen Führungsflächen (524) jedes Stifts (520) rückwärts von der Öffnung (525) aus in einem Winkel von fünfundvierzig Grad (45°) zur Längsverlängerung des Pins und von neunzig Grad (90°) zueinander erstrecken.

6. Schnellverbindungskupplung nach Anspruch 4, wobei sich ein Entriegelungsfinger (508) von jedem Verriegelungsgehäuseteil (506) an einem gegenüber dem sich axial erstreckenden Trägerteil (512) liegenden Ende aus erstreckt, wobei jeder Entriegelungsfinger (508) ein vorderes, eine allgemein rechtwinklig zur Längsachse des Verifizierungs-Pins axial von der gekrümmten, rückwärts gerichteten radialen Neigungsfläche (522) eines der Stifte (520) beabstandete Anschlagfläche (505) definierendes Ende aufweist.

7. Schnellverbindungskupplungs-Baugruppe nach Anspruch 6, wobei das Verbindungsgehäuse (312) einen ringförmigen, eine radiale ringförmige Verriegelungsfläche (344) vor der Eingangsöffnung (334) definierenden Rand (340) aufweist, wobei die Halterung (314) einen innerhalb des Rands angeordneten Ringteil (456) aufweist; wobei die sich axial erstreckenden Verriegelungsarme (476) eine rückwärts gerichtete, von der radialen Verriegelungsfläche (344) des Verbindungsgehäuses aus geneigten Neigungsfläche (484) aufweist, wobei sich die rückwärts gerichteten Führungselemente (481) vom Ring (456) aus rückwärts erstrecken und der Ring (456) mehrere radiale, zwischen den Führungselementen (480) angeordnete, einen Kanal mit den rückwärts gerichteten Neigungsflächen (484) der Verriegelungsarme definierende Vorsprünge (479) aufweist, und wobei die Anschlagflächen (465) der Entriegelungsfinger (508) rückwärtig der Vorsprünge (479) angeordnet sind, wenn sich die rückwärtigen Neigungsflächen (522) der Stifte (520) in einem Neigungsverhältnis zu den gekrümmten Endfläche (468) der Schlitze (466) befinden.

8. Schnellverbindungskupplung nach Anspruch 1, wobei der längliche zylindrische Teil (502) eine äußere zylindrische Fläche (510) aufweist und das massive freie Ende (504) im Dichtungskammerteil der Durchgangsbohrung (333) angeordnet ist, und wobei das Dichtungselement (316) wenigstens eine O-Ring-Dichtung (360, 362) in fluiddichtem Verhältnis zwischen der zylindrischen Fläche (510) und dem Dichtungskammerteil des Verbindungsgehäuses (312) aufweist.

9. Schnellverbindungskupplung nach Anspruch 8, wobei ein ringförmiger äußerer Abstandhalter (364) in dem die Dichtungskammer definierenden Teil der Durchgangsbohrung vor dem Dichtungselement (316) angeordnet ist, und wobei das massive freie Ende (504) des länglichen zylindrischen Teils (502) in dem äußeren Abstandhalter (364) angeordnet ist.

10. Schnellverbindungskupplung nach Anspruch 1, wobei die gegenüber liegenden, sich axial erstreckenden Trägerteile (512) einen allgemein "V"-förmigen Raum zwischen diesen aufweisen, der eine radiale Auslenkung des Verriegelungsgehäuses (506) in Richtung zueinander bei Anbringen einer radialen, nach innen gerichteten Kraft gestattet.

11. Schnellverbindungskupplung nach Anspruch 10, wobei sich ein Entriegelungsfinger (508) von jedem Verriegelungsgehäuseteil (506) an einem dem gegenüber dem sich axial erstreckenden Trägerteil (512) liegenden Ende erstreckt.

12. Verifizierungs-Pin (500) für eine Schnellverbindungskupplung, aufweisend ein einen Fluiddurchgang und eine Rohr aufnehmende Bohrung für lösbare Aufnahme eines starren Rohres definierendes Verbindungsgehäuse, eine vom Verbindungsgehäuse getragene Halterung für lösbare Sicherung des Rohres am Gehäuse und ein Dichtungselement innerhalb der das Rohr aufnehmenden Bohrung zur Bereitstellung einer fluiddichten Abdichtung zwischen der Bohrung im Gehäuse und dem Rohr, wobei der Verifizierungs-Pin für lösbares Sicherung innerhalb der das Rohr aufnehmenden Bohrung des Verbindungsgehäuses angeordnet ist, wobei der Pin Folgendes aufweist:
einen in Längsrichtung länglichen zylindrischen Teil (502), aufweisend ein massives freies Ende (504) und einen zylindrische Fläche (510), die bemessen ist für ein fluiddichtes Verhältnis zum Dichtungselement (316) der Verbindung;
**dadurch gekennzeichnet, dass**
der Pin gegeneinander gerichtete Verriegelungsgehäuseteile (506) aufweist, wobei jeder Verriegelungsgehäuseteil (506) einen sich axial erstreckenden Trägerteil (512) aufweist, der sich gegenüber liegenden massiven freien Ende vom länglichen zylindrischen Teil (502) aus erstreckt, wobei Verriegelungsgehäuseteile (506) einen allgemein "V"-förmigen Raum zwischen diesen definieren, um ein radiales Auslenken des Verriegelungsgehäuseteils (506) gegenüber dem anderen zu gestatten; wobei die Verriegelungsgehäuseteile für ein lösbares Sicherung des Verifizierungs-Pins (500) an der Schnellverbindungskupplung ausgeführt ist;
wobei jeder Verriegelungsgehäuseteil (506) einen radial gerichteten Stift (520) aufweist, wobei jeder Stift (520) eine rückwärts gerichtete radiale Neigungsfläche (522) aufweist;
wobei jeder Stift (520) vorwärts gerichtete Führungsfläche (524) aufweist, die vorwärts zusammenlaufen, um eine Öffnung (525) zu treffen.

13. Verifizierungs-Pin nach Anspruch 12, wobei sich ein Entriegelungsfinger (508) von jedem Verriegelungsgehäuseteil (506) aus an einem dem sich axial erstreckenden Trägerteil (512) liegenden Ende erstreckt.

14. Verifizierungs-Pin nach Anspruch 13, wobei die Entriegelungsfinger (508) ein vorderes Ende aufweisen, das eine allgemein rechtwinklig zur Längsachse der Verifizierungs-Pins axial von der gekrümmten rückwärtigen radialen Neigungsfläche (522) des Stifts (520) liegende Anschlagfläche (504) definiert.

15. Verifizierungs-Pin nach Anspruch 12, wobei sich die vorwärts gerichtete Führungsfläche (524) jedes Stifts (520) von der Öffnung (525) aus rückwärts in einem Winkel von fünfundvierzig Grad (45°) zur Längsausbreitung des Stifts und neunzig Grad (90°) zueinander erstrecken.

## Revendications

1. Raccord (310) pour un couplage à connecteur rapide comprenant :
un corps de connecteur (312) présentant un alésage traversant (333) s'étendant axialement en avant d'une ouverture d'entrée (334) à une extrémité vers une ouverture de sortie (335) à une extrémité opposée, l'alésage traversant (333) définissant une partie de réception d'arrêtoir axialement en avant de l'ouverture d'entrée, une partie de réception de tube axialement en avant de la partie de réception d'arrêtoir et une partie de chambre d'étanchéité axialement en avant de la partie de réception de tube,
un arrêtoir de tube (314) disposé de façon libérable dans la partie de réception de tube fixé au corps de connecteur (312) ;
un élément d'étanchéité (316) disposé dans la partie de chambre d'étanchéité,
une broche de vérification (500) présentant une extrémité libre solide (504) disposée dans l'alésage traversant (333), la broche (500) comprenant une partie de tronc allongée (502) en liaison d'étanchéité aux fluides avec l'élément d'étanchéité (316) dans la partie de chambre d'étanchéité ;
**caractérisé en ce que** la broche comprend en outre
des parties de corps de verrouillage opposées (506) comprenant chacune une partie de traverse (512) s'étendant axialement, s'étendant depuis la partie de tronc allongée (502) à une extrémité opposée de l'extrémité libre solide (504) ; les parties de corps de verrouillage opposées (506) étant engagées de façon libérable avec l'arrêtoir (314) pour fixer de façon libérable la broche de vérification (500) dans l'alésage traversant (333).

2. Raccord de couplage à connecteur rapide selon la revendication 1, dans lequel l'arrêtoir (314) comprend une pluralité de bras de verrouillage (476) s'étendant axialement avec des fentes (466) entre eux définies par des faces latérales (467) s'étendant axialement qui se terminent en surfaces d'extrémité incurvées (468), et dans lequel au moins une des parties de corps de verrouillage (506) comprend un cliquet (520) dirigé radialement vers l'extérieur disposé à l'intérieur de l'une des fentes (466) ; l'au moins un cliquet (520) comprenant une surface de butée radiale arrière (522) en relation de butée avec la surface d'extrémité incurvée (468) de la fente (466).

3. Ensemble de raccord de couplage à connecteur rapide selon la revendication 2, dans lequel chaque partie de corps de verrouillage (506) comprend un cliquet (520) dirigé radialement vers l'extérieur disposé à l'intérieur de l'une des fentes (466), les cliquets (520) incluant chacun une surface de butée radiale arrière (522) en butée avec l'une des surfaces d'extrémité incurvée (468) de l'une des fentes (466).

4. Raccord de couplage à connecteur rapide selon la revendication 3, dans lequel chaque arrêtoir (314) comprend une pluralité d'éléments-guides dirigés vers l'arrière (481), chacun étant défini par deux surfaces-guides en angle (482) formées dans un angle relatif à un plan perpendiculaire à l'axe longitudinal de l'arrêtoir, et dans lequel chaque cliquet (520) comprend des surfaces-guides dirigées en avant (524) qui convergent vers l'avant vers un sommet (525) ; les surfaces-guides dirigées en avant (524) s'étendant vers l'arrière du sommet (525) dans un angle par rapport à l'extension longitudinale de la broche, les surfaces-guides en angle (482) des éléments-guides dirigés vers l'arrière (481) de l'arrêtoir (314) et les surfaces-guides en avant (524) des cliquets (520) coagissant pour aligner les cliquets (520) de la broche de vérification (500) avec les fentes (466) entre les bras de verrouillage (476) de l'arrêtoir (314) à l'insertion de la broche (500) dans l'alésage traversant (333) du corps de connecteur (312).

5. Raccord de couplage à connecteur rapide selon la revendication 4, dans lequel les surfaces-guides en angle (482) de chacun des éléments-guides dirigés vers l'arrière (481) de l'arrêtoir (314) sont formées à un angle de quatre-vingt-dix degrés (90°) l'une par rapport à l'autre et de quarante-cinq degrés (45°) par rapport au plan perpendiculaire à l'axe longitudinal de l'arrêtoir et les surfaces-guides en avant (524) de chaque cliquet (520) s'étendent vers l'arrière du sommet (525) à un angle de quarante-cinq degrés (45°) par rapport à l'extension longitudinale de la broche et de quatre-vingt-dix degrés (90°) l'une par rapport à l'autre.

6. Raccord de couplage à connecteur rapide selon la revendication 4, dans lequel un doigt de libération (508) s'étend depuis chaque partie de corps de verrouillage (506) à une extrémité opposée à la partie de traverse (512) s'étendant axialement, chaque doigt de libération (508) comprenant une extrémité avant définissant une surface d'arrêt (509) généralement perpendiculaire à l'axe longitudinal de la broche de vérification espacée axialement de la surface de butée radiale arrière incurvée (522) de l'un des cliquets (520).

7. Ensemble de raccord de couplage à connecteur rapide selon la revendication 6, dans lequel le corps de connecteur (312) comprend un rebord annulaire (340) définissant une surface de verrouillage annulaire radialement (344) en avant de l'ouverture d'entrée (334), l'arrêtoir (314) comprend un partie de bague (456) disposée à l'intérieur du rebord ; les bras de verrouillage (476) s'étendant axialement comprenant chacun une surface de butée arrière (484) en butée contre la surface de verrouillage annulaire radialement (344) du corps de connecteur, les éléments-guides dirigés vers l'arrière (481) s'étendent vers l'arrière de la bague (456) et la bague (456) comprend une pluralité de saillies radiales (479) disposées entre les éléments-guides (481) qui définissent un canal (465) avec les surfaces de butée arrière (484) des bras de verrouillage, et dans lequel les surfaces d'arrêt (509) des doigts de libération (508) sont disposées à l'arrière des saillies (479) lorsque les surfaces de butée arrière (522) des cliquets (520) sont dans une relation de butée par rapport aux surfaces d'extrémité incurvées (468) des fentes (466).

8. Raccord de couplage à connecteur rapide selon la revendication 1, dans lequel la partie de tronc allongée (502) comprend une surface cylindrique extérieure (510) et l'extrémité libre solide (504) est disposée dans la partie de chambre d'étanchéité de l'alésage traversant (333) ; et l'élément d'étanchéité (316) comprend au moins un joint torique (360, 362) disposé en relation d'étanchéité aux fluides entre la surface cylindrique (510) et la partie de chambre d'étanchéité du corps de connecteur (312).

9. Raccord de couplage à connecteur rapide selon la revendication 8, dans lequel un écarteur annulaire extérieur (364) est disposé dans la partie définissant la chambre d'étanchéité de l'alésage traversant (333) en avant de l'élément d'étanchéité (316) et l'extrémité libre solide (504) de la partie de tronc allongée (502) est disposée dans l'écarteur extérieur (364).

10. Raccord de couplage à connecteur rapide selon la revendication 1, dans lequel les parties de traverse (512) opposées s'étendant axialement définissent un espace généralement en « V » entre elles, ce qui permet le fléchissement radial des parties de corps de verrouillage (506) en direction l'une de l'autre à l'application d'une force intérieure radiale.

11. Raccord de couplage à connecteur rapide selon la revendication 10, dans lequel un doigt de libération (508) s'étend depuis chaque partie de corps de verrouillage (506) à une extrémité opposée à la partie de traverse (512) s'étendant axialement.

12. Broche de vérification (500) pour un raccord de couplage à connecteur rapide présentant un corps de connecteur définissant un passage de fluide et un alésage recevant un tube pour recevoir de façon libérable un tube rigide, un arrêtoir supporté par le corps de connecteur pour fixer de façon libérable le tube au corps, et un élément d'étanchéité à l'intérieur de l'alésage recevant un tube pour fournir une étanchéité aux fluides entre l'alésage dans le corps et le tube, la broche de vérification étant adaptée pour être fixée de manière libérable à l'intérieur de l'alésage recevant un tube du corps de connecteur, la broche comprenant :
une partie de tronc allongée longitudinalement (502) présentant une extrémité libre solide (504) et une surface cylindrique (510) dimensionnée pour une relation d'étanchéité aux fluides avec l'élément d'étanchéité (316) du raccord ;
**caractérisée en ce que** la broche comprend des parties de corps de verrouillage opposées (506), chaque partie de corps de verrouillage (506) comprenant une partie de traverse (512) s'étendant axialement, s'étendant depuis la partie de tronc allongée (502) à l'extrémité opposée de l'extrémité libre solide (504) ; les parties de corps de verrouillage (506) définissant un espace généralement en « V » entre elles pour permettre le fléchissement radial de la partie de corps de verrouillage (506) en direction de l'autre, les parties de corps de verrouillage étant adaptées pour fixer la broche de vérification (500) sur le raccord de couplage à connecteur rapide de manière à pouvoir la libérer ;
sachant que chaque partie de corps de verrouillage (506) comprend un cliquet dirigé radialement (520), chaque cliquet (520) comprenant une surface de butée radiale arrière incurvée (522) ;
sachant que chaque cliquet (520) comprend des surfaces-guides en avant (524) qui convergent vers l'avant pour se rencontrer sur un sommet (525).

13. Broche de vérification selon la revendication 12, dans laquelle un doigt de libération (508) s'étend depuis chaque partie de corps de verrouillage (506) à une extrémité opposée à la partie de traverse (512) s'étendant axialement.

14. Broche de vérification selon la revendication 13, dans laquelle les doigts de libération (508) comprennent une extrémité avant définissant une surface d'arrêt (509) généralement perpendiculaire à l'axe longitudinal de la broche de vérification espacée axialement de la surface de butée radiale arrière incurvée (522) du cliquet (520).

15. Broche de vérification selon la revendication 12, dans laquelle la surface-guide avant (524) de chaque cliquet (520) s'étend vers l'arrière du sommet (525) à un angle de quarante-cinq degrés (45°) par rapport à l'extension longitudinale de la broche et de quatre-vingt-dix degrés (90°) l'une par rapport à l'autre.
